# EUROPEAN PATENT APPLICATION

(11) **EP 3 162 613 A1**
(43) Date of publication of application: **03.05.2017**
(21) Application number: 15812321.6
(22) Date of filing: 20.05.2015
(51) Int. Cl.: B60M 3/00, B60M 3/04

(54) **POWER SUPPLY EQUIPMENT FOR AC ELECTRIC VEHICLE**

(30) Priority: 26.06.2014 JP 2014131079
(71) Applicant: Meidensha Corporation, Tokyo 141-6029 (JP)
(72) Inventor: WATANABE, Hideo, Tokyo 141-6029 (JP); OGAWA, Yoshiharu, Tokyo 141-6029 (JP)
(74) Representative: Manitz Finsterwald Patentanwälte PartmbB
(86) International application number: PCT/JP2015/064416
(87) International publication number: WO 2015/198756

(57) **Abstract**

The tap positions of a first and a second tap switching transformers are respectively set as a large output position and as a small output position until all of the pantographs of an electric vehicle pass through an inlet-side air section. After all of the pantographs pass through the inlet-side air section before a front-side pantograph of the electric vehicle reaches the outlet-side air section, the second tap switching transformer tap position is gradually switched in an output increasing direction while the first tap switching transformer tap position is switched in an output decreasing direction, and the tap positions of the first and the second tap switching transformers are respectively set as the small output position and as the large output position. Thus, in the central section of power supply equipment for an AC electric vehicle, power supply phase-switching is performed without a momentary power failure.

## Description

### TECHNICAL FIELD

The present invention relates to power supply equipment for an AC (alternating current) electric vehicle, and especially to a power supply switching system for passing the electric vehicle through a section between different power supplies.

### BACKGROUND TECHNOLOGY

Since an AC (alternating current) electric vehicle, such as the Shinkansen, is a single-phase, an AC power supply is received as a three-phase from an electric power company, and converted into the single-phase and it is fed to the AC electric vehicle by using a three-phase-single-phase converter. As this three-phase-single-phase converter, there are a Scott transformer equipped with two single-phase power supplies (an M-seat and a T-seat) at a secondary side and a Woodbridge transformer equipped with two single-phase power supplies (an A-seat and a B-seat) at a secondary side, etc.

With this, the electric vehicle runs over power supplies whose phases are different from each other, and a section where different power supplies face each other is provided at a substation and a feeding sectioning point to prevent a short circuit between the different phases. In regular railway lines, a dead section is provided at this section where the different power supplies face each other, and in the Shinkansen line, a central section as a switching section is provided, and the power supply is switched.

A changeover switch is adopted to the central section adopted in the Shinkansen line. However, there are many problems in this system. In the following, main problems are shown.

In the central section, the opening/closing of the changeover switch is performed to switch the power supply every time when the electric vehicle passes. Equipment capable of enduring the frequent opening/closing is therefore required. In current technology, the checkup of the equipment is required every time when the opening/closing is performed 50,000 times, a vacuum valve replacement is required every time when it is performed 100,000 times, and the replacement of the changeover switch is required every time when it is performed 200,000 times, and running cost therefore becomes high.

In addition, a short circuit failure between electrodes frequently occurs caused by the opening/closing surge of the changeover switch and the deterioration of insulation between the electrodes. Consequently, the reliability of a feeding system deteriorates, and the system becomes complicated caused by, for example, providing a failure detection relay. As a measure against the opening/closing surge of the changeover switch, there is a business operator where a capacitor C and a resistor R are provided at the central section.

Moreover, it is necessary to detect that the electric vehicle is on rails in the central section to perform the opening/closing of the changeover switch, and a track circuit for electric vehicle on-rail detection is required to detect that this electric vehicle is on the rails in the central section.

When the power supply is switched, a momentary power failure occurs for approximately 300±50 ms, and the following measures (1) to (3) are therefore taken. However, by these measures (1) to (3), a cost increases.
(1) In the vehicle, when the power failure recovers, the stop and the restart of an inverter are automatically performed, and a vehicle driving system consequently becomes complicated. In addition, vehicles of overseas makers cannot pass through switching sections in Japan.
(2) The momentary power failure occurs caused by the switching of the power supply, and a rush current repeatedly flows to an onboard transformer. As a measure against this, an onboard transformer designed to be tough is required to be mounted on the vehicle. The reduction of the size and the weight of the transformer therefore becomes difficult, and it is contrary to the reduction of the weight of the vehicle.
(3) In the Tokaido Shinkansen line, since ride comfort deteriorates when the momentary power failure occurs, a notch is turned off for a while before the power failure occurs in the central section and the notch is turned on for a while after the power failure recovers, and thereby improving the deterioration of the ride comfort caused by the momentary power failure. However, in order to do this, it is necessary to adopt an ATC (Automatic Train Control) system having a high train detection accuracy.

As explained above, in the power supply equipment for the AC electric vehicle, the present invention addresses the problem of performing the phase switching of the power supply without causing the momentary power failure in the central section.

### PRIOR ART REFERENCES

### PATENT DOCUMENTS

Patent Document 1: Japanese Patent No. 4082033
Patent Document 2: Japanese Patent No. 4207640
Patent Document 3: Japanese Patent No. 4396606

### SUMMARY OF THE INVENTION

The present invention was made in consideration of such a conventional problem. As to its one aspect, in power supply equipment for an AC electric vehicle in which a central section having an inlet-side air section and an outlet-side air section provided at both ends thereof is provided at a section at which the different power supplies of an inlet-side power supply and an outlet-side power supply face each other, the power supply equipment for the AC electric vehicle includes: a phase converter having: a first tap switching transformer of which a primary winding is connected to the inlet-side power supply and a secondary winding is provided with a switching tap, at the central section; a second tap switching transformer of which a primary winding is connected to the outlet-side power supply and a second wingding is provided with a switching tap, at the central section; and a third transformer of which both of the ends of a first winding are respectively connected to the switching tap of the first tap switching transformer and to the switching tap of the second tap switching transformer, and a second winding is connected to a trolley wire and a rail in the central section, at the central section, wherein the phase converter sets the tap position of the first tap switching transformer as a large output position, and the tap position of the second tap switching transformer as a small output position until all of the pantographs of the electric vehicle pass through the inlet-side air section, wherein the phase converter gradually switches the tap position of the second tap switching transformer to an output increasing direction while the tap position of the first tap switching transformer is switched in an output decreasing direction, before a front pantograph of the electric vehicle reaches the outlet-side air section after all of the pantographs of the electric vehicle pass through the inlet-side air section, and wherein the phase converter sets the tap position of the first tap switching transformer as the large output position and the tap position of the second tap switching transformer as the small output position, after all of the pantographs of the electric vehicle pass through the outlet-side air section.

In addition, one aspect of the present invention is the power supply equipment for the AC electric vehicle wherein the phase converter at a time when the tap position of the first tap switching transformer is set as the large output position and the tap position of the second tap switching transformer is set as the small output position, and the inlet-side power supply have a detectable power supply phase difference therebetween, wherein the phase converter at a time when the tap position of the first tap switching transformer is set as the small output position and the tap position of the second tap switching transformer is set as the large output position, and the outlet-side power supply have a detectable power supply phase difference therebetween, wherein the pantograph of the electric vehicle which is during passage through the inlet-side air section is detected by becoming the power supply phase difference between the inlet-side power supply and the central section to a set value or less, while the pantograph of the electric vehicle passes through the inlet-side air section, wherein the pantograph of the electric vehicle which is during passage through the outlet-side air section is detected by becoming the power supply phase difference between the outlet-side power supply and the central section to a set value or less, while the pantograph of the electric vehicle passes through the outlet-side air section, and wherein the electric vehicle which is on rails in the central section is judged based on the detection that the pantograph of the electric vehicle is during the passage through the inlet-side air section and on the detection that the pantograph of the electric vehicle is during the passage through the outlet-side air section.

Moreover, another aspect of the present invention is the power supply equipment for the AC electric vehicle wherein the output voltage of the phase converter at a time when the tap position of the first tap switching transformer is set as the large output position and the tap position of the second tap switching transformer is set as the small output position, and the voltage of the inlet-side power supply have a detectable voltage difference therebetween, wherein the output voltage of the phase converter at a time when the tap position of the first tap switching transformer is set as the small output position and the tap position of the second tap switching transformer is set as the large output position, and the voltage of the outlet-side power supply have a detectable voltage difference therebetween, wherein the pantograph of the electric vehicle which is during passage through the inlet-side air section is detected by becoming the voltage difference between the inlet-side power supply and the central section to a set value or less, while the pantograph of the electric vehicle passes through the inlet-side air section, wherein the pantograph of the electric vehicle which is during passage through the outlet-side air section is detected by becoming the voltage difference between the outlet-side power supply and the central section to a set value or less, while the pantograph of the electric vehicle passes through the outlet-side air section, and wherein the electric vehicle which is on the rails in the central section is judged based on the detection that the pantograph of the electric vehicle is during the passage through the inlet-side air section and on the detection that the pantograph of the electric vehicle is during the passage through the outlet-side air section.

In addition, the primary winding of the first tap switching transformer and the primary winding of the second tap switching transformer may be shared with auto-transformers provided at the power supply equipment for the AC electric vehicle.

According to the present invention, in the power supply equipment for the AC electric vehicle, it becomes possible to perform the phase switching of the power supply without causing a momentary power failure in the central section.

### BRIEF DESCRIPTION OF THE DRAWINGS

FIG. 1 is a schematic diagram showing a Scott transformer.
FIG. 2 is a schematic diagram showing a phase converter in an embodiment.
FIG. 3 is a schematic diagram showing the example of the tap switching of a tap switching transformer.
FIG. 4 is a diagram showing the output voltage vector of the phase converter.
FIG. 5 is a schematic diagram showing power supply equipment for an AC (alternating current) electric vehicle in an embodiment 4.

### MODE FOR IMPLEMENTING THE INVENTION

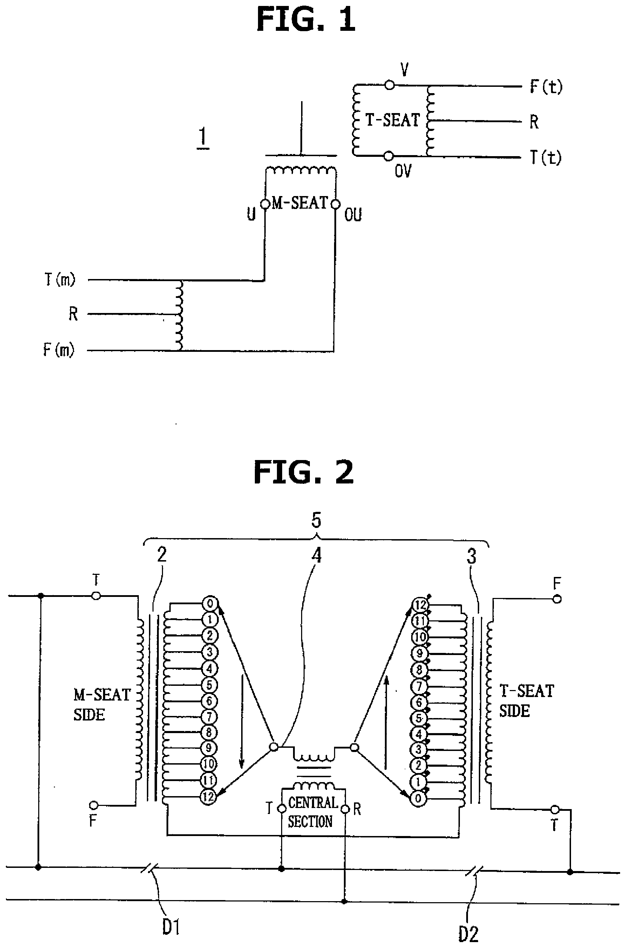

In the following, embodiments 1 to 4 of power supply equipment for an AC (alternating current) electric vehicle according to the present invention is explained based on FIG. 1 to FIG. 5.

### [Embodiment 1]

A Scott transformer is explained as an example to explain an embodiment 1 so as to be easily understood. FIG. 1 is a schematic diagram showing a Scott transformer 1. As shown in FIG. 1, an M-seat and a T-seat are provided at the secondary side of the Scott transformer 1. A phase between the M-seat and the T-seat is different by 90 degrees. A trolley wire T, a feeder wire F and a rail R are led out from each of the M-seat of the secondary side and the T-seat of the secondary side.

As shown in FIG. 2, a phase converter 5 is provided at a central section at which different power supplies face each other. The phase converter 5 has a first tap switching transformer 2, a second tap transformer 3 and a transformer 4.

As to the first tap switching transformer 2, a primary winding is connected to the trolley wire T and to the feeder wire F in the M-seat (an inlet-side power supply) of the Scott transformer 1. In addition, as to the second tap switching transformer 3, a primary winding is connected to the trolley wire T and to the feeder wire F in the T-seat (an outlet-side power supply) of the Scott transformer 1. The first tap switching transformer 2 has the same phase as that of the M-seat (the inlet-side power supply) of the Scott transformer 1, and the second tap switching transformer 3 has the same phase as that of the T-seat (the outlet-side power supply) of the Scott transformer 1.

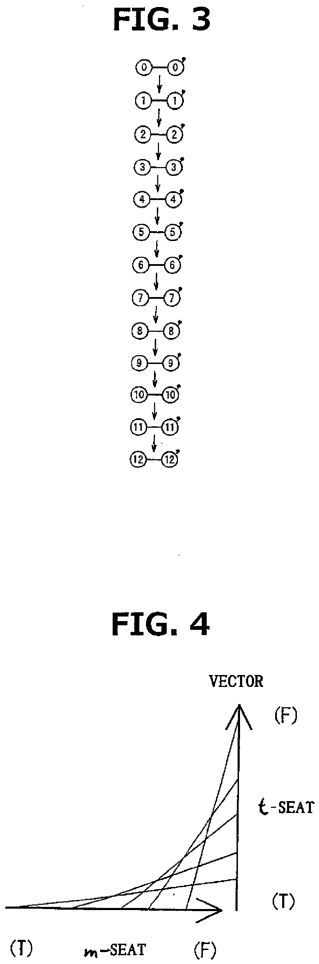

A switching tap to convert the phase is provided to each of the second winding of the first tap switching transformer 2 and the second winding of the second tap switching transformer 3. For example, as shown in FIG. 2 and FIG. 3, the number of the steps of the taps of each of the first and the second tap switching transformers 2 and 3 is set to 13 taps (0 to 12), and a phase difference between the adjacent taps is set at approximately 7.5 degrees.

Both of the ends of the primary winding of the transformer 4 are connected to the taps of the first tap switching transformer 2 and the second tap switching transformer 3. Both of the ends of the second winding of the transformer 4 are connected to the trolley wire T and the rail R of the central section

There are two sets of the central sections, and one of them is for an up line and the other is for a down line. The phase converter 5 is therefore provided at each of the up line and the down line.

In addition, both of the ends of the central section (generally 1,000 m) in the trolley wire T are provided with an air section D1 and an air section D2 (generally 50 m).

When the entering of the electric vehicle into the central section is completed, the phase converter 5 switches the taps of the tap switching transformers 2 and 3 while linked with each other by a control part (not shown in the drawings). That is, as shown in FIG. 4, the tap position of the first tap switching transformer 2 of the central section is switched in an output decreasing direction, and the tap position of the second tap switching transformer 3 of the central section is switched in an output increasing direction.

FIG. 4 is a diagram showing the output voltage vector of the phase converter 5. As mentioned above, the tap position of the first tap switching transformer 2 is switched in the output decreasing direction, and the tap position of the second tap switching transformer 3 is switched in the output increasing direction. By this, it becomes possible to gradually switch the output voltage vector of the phase converter 5 to the phase of the outlet-side power supply of the electric vehicle from the phase of the inlet-side power supply of the electric vehicle while keeping the output voltage of the phase converter 5 constant. As a result, the electric vehicle can pass through the central section with power running without causing the power failure.

The switching of the taps is to be a phase input system by the principle of a tap switching transformer when loaded by a thyristor switch, and a current at the time of bridging between the taps can be suppressed. (The thyristor type tap switching transformer has already been put into practical use in an AC overhead line voltage compensation device ACVR).

Next, the example of the operation of the power supply equipment for the AC electric vehicle in the present embodiment 1 is explained. In the present embodiment 1, there is a condition signal that the electric vehicle is on rails in the central section from a track circuit for electric vehicle on-rail detection, etc. Here, a case where the electric vehicle runs from the M-seat (left) to the T-seat (right) in the up line is explained as an example.
(1) In an initial state (a state before the electric vehicle enters into the central section), the tap position of the first tap switching transformer 2 is set as a large output position, and the tap position of the second tap switching transformer 3 is set as a small output position (for example, 0-0'), and the central section and the M-seat are set to have the same phase.
(2) When the electric vehicle completely enters into the central section, the signal of "the electric vehicle exists" is inputted to the control part. The control part sequentially switches the tap position of the first tap switching transformer 2 to the output decreasing direction and the tap position of the second tap switching transformer 3 to the output increasing direction (from 0-0', 1-1', 2-2' to 12-12') within a certain period of time (a short time of approximately one second) by the signal of "the electric vehicle exists". In this way, by switching the taps, the phase of the central section is switched to that of the T-seat from that of the M-seat while keeping the output voltage of the phase converter 5 constant. The central section has the same phase as that of the T-seat, and consequently, it becomes possible to run the electric vehicle from the central section to the T-seat with the power running without the power failure.
(3) After the electric vehicle passes through the central section, the signal of "the electric vehicle does not exist" is inputted to the control part. The control part to which the signal of "the electric does not exist" is inputted returns the tap position of the first tap switching transformer 2 to the large output position and the tap position of the second tap switching transformer 3 to the small output position (for example, 0-0'), and then waiting for the entering of the next electric vehicle in a state in which the central section has been the same phase as that of the M-seat.

As shown above, according to the power supply equipment for the AC electric vehicle in the present embodiment 1, the phase of the central section can be switched from that of the inlet-side power supply to that of the outlet-side power supply while keeping the voltage of the central section constant, the momentary power failure of the electric vehicle at the time when the electric vehicle passes through the central section can therefore be prevented.

In addition, according to the power supply equipment for the AC electric vehicle in the present embodiment 1, a changeover switch becomes unnecessary, and, moreover, the replacement of the changeover switch also becomes unnecessary.

Furthermore, since a short circuit failure between electrodes is prevented, a protection system for a short circuit between different phases becomes unnecessary, and consequently, the reliability of the power supply equipment system for the AC electric vehicle is improved.

In addition, an excessive serge voltage caused by the opening/closing of the changeover switch is prevented, and consequently, a serge measure apparatus, such as an onboard apparatus, becomes unnecessary.

Moreover, a rush current caused by the opening/closing of the changeover switch is prevented, and consequently, it becomes possible to simplify the power supply system for the AC electric vehicle.

In addition, according to the power supply equipment for the AC electric vehicle in the present embodiment 1, in the central section, a continuous current carrying is performed and the momentary power failure does not occur, and consequently, a measure system against the momentary power failure at the time when the electric vehicle passes through the central section becomes unnecessary. Furthermore, acceleration change at the time when the electric vehicle passes through the central section is prevented, and consequently, the improvement measure of ride comfort becomes unnecessary, and furthermore, the ride comfort is improved because the acceleration change caused by the power failure is prevented.

Furthermore, by providing the transformer 4 and setting the first and the second tap switching transformers 2 and 3 to be tap switching transformers matching the standard voltage and the standard current of the thyristor, the system can be economically constructed.

### [Embodiment 2]

As to the power supply equipment for the AC electric vehicle in the embodiment 1, the condition signals of "the electric vehicle exists" and "the electric vehicle does not exist" need to be inputted from the track circuit for the electric vehicle on-rail detection. However, the power supply equipment for the AC electric vehicle in a present embodiment 2 autonomously detects that the electric vehicle is during the passage through the air section and judges that the electric vehicle is on the rails in the central section based on that passage detection. In the following, the method for the detection is explained.

As to the power supply equipment for the AC electric vehicle in the present embodiment 2, a detectable phase difference is set between the phase converter 5 in a case where the tap position of the first tap switching transformer 2 is set as the large output position and the tap position of the second tap switching transformer 3 is set as the small output position, and the inlet-side power supply. In addition, similar to this, a detectable phase difference is set between the phase converter 5 in a case where the tap position of the first tap switching transformer 2 is set as the small output position and the tap position of the second tap switching transformer 3 is set as the large output position, and the outlet-side power supply.

At the time when the pantograph of the electric vehicle passes through the inlet-side air section D1, the central section and the inlet-side power supply are short-circuited, and consequently, the voltage of the inlet-side power supply has the same phase as that of the voltage of the central section when the electric vehicle passes through the inlet-side air section D1. Thus, in a case where the inlet-side power supply and the central section have the same phase, it is possible to detect that the pantograph of the electric vehicle is during the passage through the inlet-side air section D1. Similar to this, in a case where the central section and the outlet-side power supply have the same phase, it is possible to detect that the pantograph of the electric vehicle is during passage through the outlet-side air section D2.

There are various types of pantograph configurations in electric vehicles such as the Shinkansen. However, it is possible to basically classify into the following three types.
(1) A configuration in which one pantograph is provided on the electric vehicle.
(2) A configuration in which a plurality of pantographs are provided on the electric vehicle and these pantographs are connected to each other in the electric vehicle.
(3) A configuration in which the plurality of the pantographs are provided on the electric vehicle and these pantographs are not connected to each other.

In the case of the configuration of (1), while the pantograph of the electric vehicle passes through the inlet-side air section D1 or the outlet-side air section D2, the inlet-side power supply and the central section or the central section and the outlet-side power supply are short-circuited, and becoming the same phase.

In the case of the configuration of (2), while a pantograph provided at an front side in the electric vehicle passes through the inlet-side air section D1, the inlet-side power supply and the central section are short-circuited, and becoming the same phase.

In a case after the pantograph provided at the front side in the electric vehicle passes through the inlet-side air section D1 before a pantograph provided at a rear side in the electric vehicle reaches the inlet-side air section D1, the central section is connected to the inlet-side power supply through a route from the front pantograph to the rear pantograph through a connecting cable in the electric vehicle. The inlet-side power supply and the central section therefore become the same phase.

The inlet-side power supply and the central section are short-circuited, and becoming the same phase, while the rear pantograph passes through the inlet-side air section D1.

In this way, in the case of the configuration of the pantograph of (2), the voltage of the inlet-side power supply has the same phase as that of the voltage of the central section after the front pantograph enters into the air section and until the rear pantograph passes through the air section. In the case of the outlet-side air section D2, it is also the same as the case of the inlet-side air section D1.

In the case of the configuration of (3), the voltage of the inlet-side power supply has the same phase as that of the voltage of the central section, only while each of the pantographs passes through the inlet-side air section D1.

The operation of the power supply equipment for the AC electric vehicle in the present embodiment 2 is explained using the case of (2) where the plurality of the pantographs of the electric vehicle are provided and these pantographs are connected to each other in the electric vehicle as an example.
«1» The tap positions of the first and the second tap switching transformers 2 and 3 are respectively set to "1" and "1'" (1-1'). In the present embodiment 2, as to 1-1', the tap position of the first tap switching transformer 2 set to "1" is defined as the large output position and the tap position of the second tap switching transformer 3 set to " 1'" is defined as the small output position. With this, a detectable phase difference is generated between the output of the phase converter 5 and the inlet-side power supply.
«2» When the pantograph of the electric vehicle enters into the inlet-side air section D1, the inlet-side power supply and the central section become a connected state, and the phase of the central section and the phase of the inlet-side power supply become the same. With this, for example, when the phase difference between the central section and the inlet-side power supply becomes a set value or less, it is possible to detect that the pantograph of the electric vehicle is during the passage through the inlet-side air section D1.
«3» When all of the pantographs of the electric vehicle completely enter into the central section after passing through the inlet-side air section D1, the phase difference between the central section and the inlet-side power supply becomes an initial setting state (1-1'). It is therefore possible to recognize that the electric vehicle is on the rails in the central section (a state in which the electric vehicle has existed).
«4» It is recognized that the electric vehicle is on the rails in the central section, and the taps of the first and the second tap switching transformers 2 and 3 are switched to 11-11' from 1-1' in a short period of time (approximately one second), and thereby switching the voltage phase of the central section to that of the outlet-side power supply from that of the inlet-side power supply. At this time, there is a detectable phase difference between the voltage of the central section at the time of the taps of 11-11' and the outlet-side power supply. In the present embodiment 2, as to 11-11', "11" is set as the small output position of the first tap switching transformer 2 and "11'" is set as the large output position of the second tap switching transformer 3. In addition, a change in the phase by 90 degrees in one second is substantially equal to a change in a frequency by 0.5 % in 50 Hz, and there is therefore no effect on the system.
«5» When the electric vehicle runs through the central section and enters into the outlet-side air section D2, the central section and the outlet-side power supply become a connected state, and then the power supply phase of the central section becomes the same as that of the outlet-side power supply. Thus, for example, when a power supply phase difference between the central section and the outlet-side power supply becomes a set value or less, it is possible to recognize that the pantograph is during the passage through the outlet-side air section D2.
«6» After all of the pantographs of the electric vehicle pass through the air section D2 of the outlet-side power supply, the phase difference between the central section and the outlet-side power supply becomes the initial setting state, and it is therefore possible to recognize that the electric vehicle came out from the central section.
«7» After this phase difference between the central section and the outlet-side power supply is detected, the taps are returned to 1-1', and then waiting for the next train.

In the case of the pantograph configuration of (3), only while each of the pantographs passes through the inlet-side air section D1, the voltage of the inlet-side power supply has the same phase as that of the voltage of the central section. In a case after the front pantograph passes through the inlet-side air section D1 and until the rear pantograph reaches the inlet-side air section D1, the voltage of the inlet-side power supply does not have the same phase as that of the voltage of the central section. With this, a method for judgement that the electric vehicle is during the passage through the air section by confirming the number of the pantographs and communicating the number of those pantographs to the control part can be considered.

As shown above, the power supply equipment for the AC electric vehicle in the present embodiment 2 performs the same effect as that of the embodiment 1. Moreover, according to the present embodiment 2, by the phase difference between the inlet-side power supply and the central section or the phase difference between the central section and the outlet-side power supply, it is detected that the electric vehicle is during the passage through the air sections D1 and D2, and it is therefore possible to judge that the electric vehicle is on the rails in the central section. The track circuit for the electric vehicle on-rail detection for switching the power supply of the central section consequently becomes unnecessary.

### [Embodiment 3]

The phase converter 5 is also provided at a section where the different power supplies face each other between substations. As to this section where the different power supplies face each other between the substations, there is also a section where the power supply of the M-seat and the power supply of the M-seat face each other or the power supply of the T-seat and the power supply of the T-seat face each other. In this way, in the section where the different power supplies face each other, in a case where the M-seat and the M-seat face each other or the T-seat and the T-seat face each other, its phase difference is 0 or approximately 0. The phase difference between the inlet-side power supply and the central section is therefore small, even if the tap position of the tap switching transformer 2 is set as the large output position and the tap position of the second tap switching transformer 3 is set as the small output position (for example, 1-1'), similar to the embodiment 2. In addition, similar to this, the phase difference between the central section and the outlet-side power supply is small, even if the tap position of the first tap switching transformer 2 is set as the small output position and the tap position of the second tap switching transformer 3 is set as the large output position (for example, 11-11'). It is therefore not possible to judge that the electric vehicle is on the rails in the central section based on the phase difference like the embodiment 2.

Therefore, in the present embodiment 3, based on a voltage difference between the inlet-side power supply and the central section and a voltage difference between the central section and the outlet-side power supply, it is detected whether the pantograph of the electric vehicle is during the passage through the air section or not.

In order to detect it, until all of the pantographs of the electric vehicle pass through the inlet-side air section, for example, the tap position of the first tap switching transformer 2 is set to "1" (the large output position), and the tap position of the second tap switching transformer 3 is set to "0'" (the small output position), and the voltage difference between the inlet-side power supply and the output of the phase converter 5 is set.

In addition, at the time of waiting for the entering of the electric vehicle into the outlet-side air section D2, the tap position of the first tap switching transformer 2 is set to "12" (the small output position), and the tap position of the second tap switching transformer 3 is set to "11'" (the large output position), and the voltage difference between the output of the phase converter 5 and the outlet-side power supply is set.

The inlet-side power supply and the central section, or the central section and the outlet-side power supply are short-circuited at the time when the pantograph of the electric vehicle passes through the air section, and consequently, the inlet-side power supply and the central section or the central section and the outlet-side power supply have the same voltage. With this, for example, when the voltage difference between the inlet-side power supply and the central section becomes a set value or less, it is possible to detect that the pantograph of the electric vehicle is during the passage through the inlet-side air section D1. Similar to this, when the voltage difference between the central section and the outlet-side power supply becomes a set value or less, it is possible to detect that the pantograph of the electric vehicle is during the passage through the outlet-side air section D2

In this way, by detecting whether the pantograph of the electric vehicle is during the passage through the air section or not, it becomes possible to judge that the electric vehicle is on the rails in the central section.

As a result, according to the power supply equipment for the AC electric vehicle in the present embodiment 3, it performs the same effect as that of the embodiment 2. In addition, in a switching section where power supplies having a small phase difference therebetween face each other, it is also possible to judge that the electric vehicle is on the rails in the central section.

### [Embodiment 4]

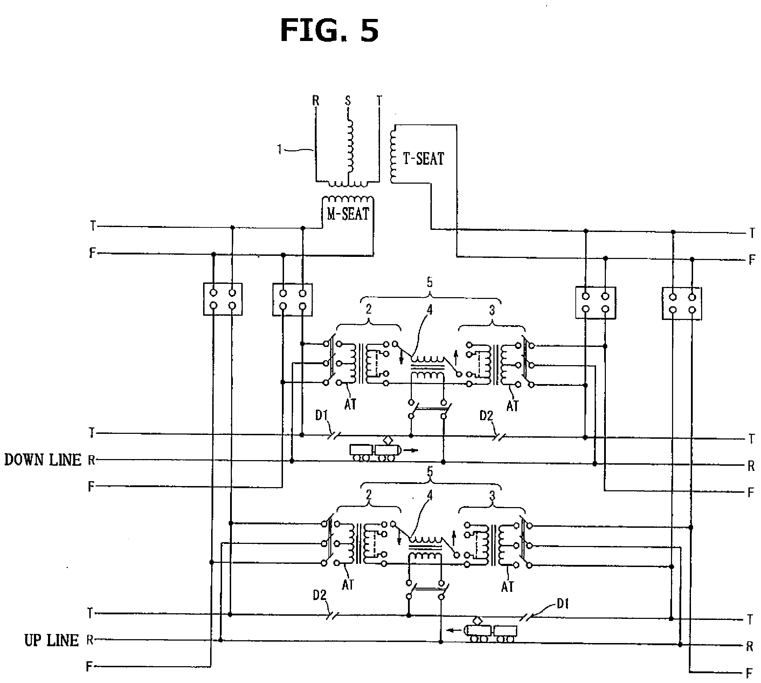

As shown in FIG. 5, the present embodiment 4 is one in which the primary windings of the tap switching transformers 2 and 3 of the phase converter 5 of any of the embodiments 1 to 3 are shared with auto-transformers AT of the substations. The phase converter 5 becomes large-scale equipment in which three transformers and two sets of tap switching transformers are used, and there is therefore a problem in economy in consideration of possibility as a single system.

In the present embodiment 4, by sharing the primary windings of the first and the second tap switching transformers 2 and 3 with the auto-transformers AT, it becomes possible to reduce total cost.

When the electric vehicle is outside the central section, as to the first and the second tap switching transformers 2 and 3, only the primary-side winding acts as the normal auto-transformer AT. When the electric vehicle enters into the central section, the first and the second tap switching transformers 2 and 3 act as a two-winding transformer, and the power supply is supplied to the central section through the transformer 4. In addition, while the electric vehicle passes through the air section, the first and the second tap switching transformers 2 and 3 exhibit both of the functions of the auto-transformer AT and the two-winding transformer.

As shown above, according to the power supply equipment for the AC electric vehicle in the present embodiment 4, it performs the same working effect as that of the embodiment 1, 2 or 3. Moreover, in addition to the working effect described in the embodiment 1, 2 or 3, by sharing the primary windings of the first and the second tap switching transformers 2 and 3 with the auto-transformers AT, it becomes possible to improve the economy.

As the above, in the present invention, only specific examples described above are explained in detail, and it is, however, obvious for a skilled person that various variations and modifications can be possible in the scope of the technical idea of the present invention. In addition, it is natural that these variations and modifications belong to the scope of claims.

The phase converter 5 of the present invention can be applied to the existing Scott transformer, a roof-delta transformer and a Woodbridge transformer by properly connecting the trolley wire T and the feeder wire F for feeding, in addition to being applied to a newly-built substation. Furthermore, also in a case of a section having different phases, section in which the feeding is performed by a single-phase feeder system and V connection system generally adopted in overseas, the phase converter 5 is a high versatile system which is capable of being applied by the similar configuration.

## Claims

1. Power supply equipment for an AC electric vehicle in which a central section having an inlet-side air section and an outlet-side air section provided at both ends thereof is provided at a section at which different power supplies of an inlet-side power supply and an outlet-side power supply face each other, the power supply equipment for the AC electric vehicle comprising:
a phase converter having:
a first tap switching transformer of which a primary winding is connected to the inlet-side power supply and a secondary winding is provided with a switching tap, at the central section;
a second tap switching transformer of which a primary winding is connected to the outlet-side power supply and a second wingding is provided with a switching tap, at the central section; and
a third transformer of which both ends of a first winding are respectively connected to the switching tap of the first tap switching transformer and to the switching tap of the second tap switching transformer, and a second winding is connected to a trolley wire and a rail in the central section, at the central section,
wherein the phase converter sets a tap position of the first tap switching transformer as a large output position, and a tap position of the second tap switching transformer as a small output position until all pantographs of the electric vehicle pass through the inlet-side air section,
wherein the phase converter gradually switches the tap position of the second tap switching transformer to an output increasing direction while the tap position of the first tap switching transformer is switched in an output decreasing direction, before a front pantograph of the electric vehicle reaches the outlet-side air section after all of the pantographs of the electric vehicle pass through the inlet-side air section, and
wherein the phase converter sets the tap position of the first tap switching transformer as the large output position and the tap position of the second tap switching transformer as the small output position, after all of the pantographs of the electric vehicle pass through the outlet-side air section.

2. The power supply equipment for the AC electric vehicle according to claim 1, wherein the phase converter at a time when the tap position of the first tap switching transformer is set as the large output position and the tap position of the second tap switching transformer is set as the small output position, and the inlet-side power supply have a detectable power supply phase difference therebetween,
wherein the phase converter at a time when the tap position of the first tap switching transformer is set as the small output position and the tap position of the second tap switching transformer is set as the large output position, and the outlet-side power supply have a detectable power supply phase difference therebetween,
wherein the pantograph of the electric vehicle which is during passage through the inlet-side air section is detected by becoming the power supply phase difference between the inlet-side power supply and the central section to a set value or less, while the pantograph of the electric vehicle passes through the inlet-side air section,
wherein the pantograph of the electric vehicle which is during passage through the outlet-side air section is detected by becoming the power supply phase difference between the outlet-side power supply and the central section to a set value or less, while the pantograph of the electric vehicle passes through the outlet-side air section, and
wherein the electric vehicle which is on rails in the central section is judged based on the detection that the pantograph of the electric vehicle is during the passage through the inlet-side air section and on the detection that the pantograph of the electric vehicle is during the passage through the outlet-side air section.

3. The power supply equipment for the AC electric vehicle according to claim 1, wherein an output voltage of the phase converter at a time when the tap position of the first tap switching transformer is set as the large output position and the tap position of the second tap switching transformer is set as the small output position, and a voltage of the inlet-side power supply have a detectable voltage difference therebetween,
wherein an output voltage of the phase converter at a time when the tap position of the first tap switching transformer is set as the small output position and the tap position of the second tap switching transformer is set as the large output position, and a voltage of the outlet-side power supply have a detectable voltage difference therebetween,
wherein the pantograph of the electric vehicle which is during passage through the inlet-side air section is detected by becoming the voltage difference between the inlet-side power supply and the central section to a set value or less, while the pantograph of the electric vehicle passes through the inlet-side air section,
wherein the pantograph of the electric vehicle which is during passage through the outlet-side air section is detected by becoming the voltage difference between the outlet-side power supply and the central section to a set value or less, while the pantograph of the electric vehicle passes through the outlet-side air section, and
wherein the electric vehicle which is on rails in the central section is judged based on the detection that the pantograph of the electric vehicle is during the passage through the inlet-side air section and on the detection that the pantograph of the electric vehicle is during the passage through the outlet-side air section.

4. The power supply equipment for the AC electric vehicle according to any one of claims 1 to 3, wherein the primary winding of the first tap switching transformer and the primary winding of the second tap switching transformer are shared with auto-transformers provided at the power supply equipment for the AC electric vehicle.
